# EUROPÄISCHE PATENTANMELDUNG

(11) **EP 2 716 996 A2**
(43) Veröffentlichungstag der Anmeldung: **09.04.2014**
(21) Anmeldenummer: 13185973.8
(22) Anmeldetag: 25.09.2013
(51) Int. Cl.: F24J 3/08

(54) **Erdsondenrohrverbindungsstück für eine modulare Erdsonde eines Geothermiesystems, Erdsondenfuß, Erdsondenkopf und Erdsonde für ein Geothermiesystem**

(30) Priorität: 08.10.2012 DE 202012103844 U
(71) Anmelder: Uponor Innovation AB, 73061 Virsbo (SE)
(72) Erfinder: Rudolf, Jürgen, 96169 Lauter/Deusdorf (DE)
(74) Vertreter: Epping - Hermann - Fischer

(57) **Zusammenfassung**

Erdsondenrohrverbindungsstück für eine modulare Erdsonde eines Geothermiesystems, Erdsondenfuß, Erdsondenkopf und Erdsonde für ein Geothermiesystem

Die Erfindung betrifft ein Erdsondenrohrverbindungsstück für eine modulare Erdsonde (1) eines Geothermiesystems, welche einen Grundkörper (6a, 6b) und wenigstens zwei Erdsondenanschlüsse (7a, 7b), insbesondere für eine Schnellverbindungstechnik aufweist. Die wenigstens zwei Erdsondenanschlüsse (7a, 7b) sind jeweils an einer Außenseite (8, 10) des Grundkörpers (6a, 6b) angeordnet und weisen wenigstens zwei unterschiedliche Größenprofile (17a, 17b, 17c) zum Anschluss von Rohrleitungen (5a, 5b) mit unterschiedlichen Querschnitten auf.

Die Erfindung betrifft des Weiteren einen Erdsondenfuß (3), einen Erdsondenkopf (2) sowie eine Erdsonde (1) für ein Geothermiesystem.

## Beschreibung

Die vorliegende Erfindung betrifft ein Erdsondenrohrverbindungsstück für eine modulare Erdsonde eines Geothermiesystems mit einem Grundkörper und wenigstens zwei Erdsondenanschlüssen. Die Erfindung betrifft des Weiteren einen Erdsondenfuß, einen Erdsondenkopf und eine Erdsonde für ein Geothermiesystem.

Die Geothermie bezeichnet die in der Erdkruste gespeicherte Wärmeenergie, welche der Erde als Wärmequelle entzogen und genutzt werden kann. Dabei wird zwischen oberflächennaher (bis zu 400 m Tiefe) und tiefer Geothermie (mehr als 400 m Tiefe) unterschieden. Geothermiesysteme nutzen diese Erdwärmeenergie beispielsweise entweder direkt zum Heizen beziehungsweise Kühlen eines Gebäudes oder indirekt zur Erzeugung von Strom. Beispielsweise wird in einem oberflächennahen Geomethermiensystem die Wärme mit Hilfe von Erdwärmesonden der Erde entzogen und an eine Wärmesenke abgegeben, wobei die Wärme in einem Medium gespeichert ist. In der Regel entspricht die Wärmesenke einer Wärmepumpe, welche die gewonnene Erdwärme von einem niedrigen Temperaturniveau (beispielsweise 10 °C) unter Energiezufuhr auf ein erforderliches, beispielsweise ein für Heizzwecke bestimmtes, Temperaturniveau (beispielsweise 22 °C) anhebt. Umgekehrt wird beispielsweise beim Kühlen eines Gebäudes Wärme über die Erdsonden an die Erde abgegeben.

Im Allgemeinen weist ein Erdsonden-Geothermiesystem mehrere Rohrleitungen auf, welche in der Regel in einem Bohrloch senkrecht zur Erdoberfläche in der Erde angeordnet sind. Das Bohrloch wird nach Verlegen der Rohre mit einem wärmeleitenden Material aufgefüllt. Somit ist es möglich, Wärme über die Rohrleitungen von der Erde aufzunehmen beziehungsweise Wärmeenergie über die Rohrleitungen an die Erde abzugeben.

Es ist eine Aufgabe der Erfindung, Vorrichtungen zu beschreiben, welche einen einfachen und schnellen Aufbau eines Erdsonden-Geothermiesystems erlauben.

Gemäß einem ersten Aspekt der Erfindung wird ein Erdsondenrohrverbindungsstück für eine modulare Erdsonde eines Geothermiesystems beschrieben. Das Erdsondenrohrverbindungsstück weist einen Grundkörper und wenigstens zwei Erdsondenanschlüsse, insbesondere für eine Schnellverbindungstechnik, auf. Die wenigstens zwei Erdsondenanschlüsse sind jeweils an einer Außenseite des Grundkörpers angeordnet und weisen wenigstens zwei unterschiedliche Größenprofile zum Anschluss von Rohrleitungen mit unterschiedlichen Querschnitten auf.

Das Erdsondenrohrverbindungsstück gemäß dem ersten Aspekt der Erfindung sieht vor, dass Rohrleitungen mit unterschiedlichen Querschnitten angeschlossen werden können. Es ist deshalb nicht nötig, für jeden unterschiedlichen Querschnitt einer Rohrleitung ein jeweiliges, passendes Anschlussstück mit entsprechendem Querschnitt bereitzustellen. Bevorzugt sind die Anschlüsse für eine Schnellverbindungstechnik eingerichtet, womit beispielsweise eine schnelle Montage auf der Baustelle möglich ist. Des Weiteren ist dadurch beispielsweise auch eine Montage bei beengten Platzverhältnissen ermöglicht. Weiter ist kein spezielles Werkzeug zum Anschluss der Rohrleitungen und keine Schweißarbeit notwendig. Zudem werden durch solche universell verwendbaren Erdsondenrohrverbindungsstücke die Lagerhaltungskosten reduziert.

Gemäß einer Ausgestaltungsform der Erfindung sind die Erdsondenanschlüsse derart ablängbar, dass ein oberflächig profilierter Anschlussbereich eines der wenigstens zwei unterschiedlichen Größenprofile endständig zum Anschluss an eine Rohrleitung mit entsprechendem Durchmesser mittels der Schnellverbindungstechnik freilegbar ist. Dadurch ist eine einstückige Herstellung der Anschlussbereiche für Rohrleitungen mit unterschiedlichen Durchmessern möglich.

Gemäß einer weiteren Ausgestaltungsform der Erfindung sind der Grundkörper und die wenigstens zwei Erdsondenanschlüsse einstückig hergestellt. Dadurch können beispielsweise die Herstellungskosten reduziert werden.

Gemäß einem zweiten Aspekt der Erfindung wird ein Erdsondenfuß mit einem Erdsondenrohrverbindungsstück gemäß dem ersten Aspekt der Erfindung beschrieben. Bei dem Erdsondenfuß sind die wenigstens zwei Erdsondenanschlüsse innerhalb des Grundkörpers fluidleitend, insbesondere durch ein U-förmiges Verbindungsstück, miteinander verbunden.

Der Erdsondenfuß gemäß dem zweiten Aspekt der Erfindung verbindet im Inneren seines Grundkörpers die zwei Erdsondenanschlüsse. Dadurch können zwei über die Erdsondenanschlüsse angeschlossene Rohrleitungen über den Erdsondenfuß verbunden werden und beispielsweise in einem Bohrloch verlegt werden.

Gemäß einem dritten Aspekt der Erfindung wird ein Erdsondenkopf beschrieben, welcher ein Erdsondenrohrverbindungsstück gemäß dem ersten Aspekt der Erfindung aufweist. Der Erdsondenkopf weist weiter zwei Verteileranschlüsse, insbesondere für eine Schnellverbindungstechnik, auf, die jeweils an einer Außenseite des Grundkörpers angeordnet sind und innerhalb des Grundkörpers jeweils mit wenigstens einem Erdsondenanschluss fluidleitend miteinander verbunden sind.

Mittels eines Erdsondenkopfes gemäß dem dritten Aspekt der Erfindung können Rohrleitungen, die an den Erdsondenanschlüssen angeschlossen sind, mit Rohrleitungen verbunden werden, die an den zwei Verteileranschlüssen angeschlossen sind. Somit ist es möglich, dass ein Fluid, welches beispielsweise Wärmeenergie aufgenommen hat, über die Erdsondenanschlüsse an die Verteileranschlüsse zur Nutzbarmachung der Wärmeenergie weitergeleitet wird.

Gemäß einer Ausgestaltungsform der Erfindung weisen die zwei Verteileranschlüsse jeweils wenigstens zwei unterschiedliche Größenprofile zum Anschluss von Rohrleitungen mit unterschiedlichen Querschnitten auf.

Gemäß einer weiteren Ausgestaltungsform der Erfindung sind die zwei Verteileranschlüsse derart ablängbar, dass ein oberflächig profilierter Anschlussbereich eines der wenigstens zwei unterschiedlichen Größenprofile endständig zum Anschluss an eine Rohrleitung mit entsprechendem Durchmesser mittels der Schnellverbindungstechnik freilegbar ist.

Gemäß einer weiteren Ausgestaltung der Erfindung sind der Grundkörper, die wenigstens zwei Erdsondenanschlüsse und die zwei Verteileranschlüsse einstückig hergestellt. Dies reduziert beispielsweise die Herstellungskosten.

Gemäß einem vierten Aspekt der Erfindung wird eine Erdsonde für ein Geothermiesystem beschrieben, welche einen Erdsondenfuß gemäß dem zweiten Aspekt der Erfindung und einen Erdsondenkopf gemäß dem dritten Aspekt der Erfindung aufweist. Der Erdsondenfuß und der Erdsondenkopf sind über mindestens zwei Erdsondenrohre miteinander verbunden, wobei der Erdsondenfuß und der Erdsondenkopf jeweils mindestens zwei Anschlüsse aufweisen. Die Erdsondenrohre sind mittels einer Schnellverbindungstechnik mit den Anschlüssen des Erdsondenfußes und des Erdsondenkopfes verbunden.

Die Erdsonde gemäß dem vierten Aspekt der Erfindung besitzt im Wesentlichen die gleichen Vorteile wie die Gegenstände der vorgenannten Aspekte der Erfindung. Die modulare Erdsonde ist für die Verwendung in einem Geothermiesystem geeignet und zeichnet sich durch ihre einfachen Anschlussmöglichkeiten und hohe Modularität aus. Dabei müssen nur wenige unterschiedliche Einzelkomponenten, insbesondere Erdsondenfüße beziehungsweise Erdsondenköpfe, unabhängig von Rohrdurchmessern der zu errichtenden Erdsonde bereitgehalten werden.

Weitere vorteilhafte Ausgestaltungen der Erfindung sind in der nachfolgenden ausführlichen Beschreibung einer beispielhaften Erdsonde sowie den abhängigen Schutzansprüchen offenbart.

Nachfolgend wird die Erfindung anhand der Erdsonde unter Bezugnahme auf die angehängten Figuren beschrieben. Unterschiedliche Instanzen gleichartiger Komponenten werden in den Figuren mit einem alphabetischen Suffix versehen, um diese besser unterscheiden zu können.

In den Figuren zeigen:
- Figur 1: eine schematische, perspektivische Darstellung einer Erdsonde gemäß einem ersten Ausführungsbeispiel der Erfindung,
- Figur 2: eine schematische Seitenansicht eines Erdsondenfußes gemäß dem ersten Ausführungsbeispiel der Erfindung, und
- Figur 3: eine schematische Seitenansicht eines Erdsondenkopfes gemäß dem ersten Ausführungsbeispiel der Erfindung.

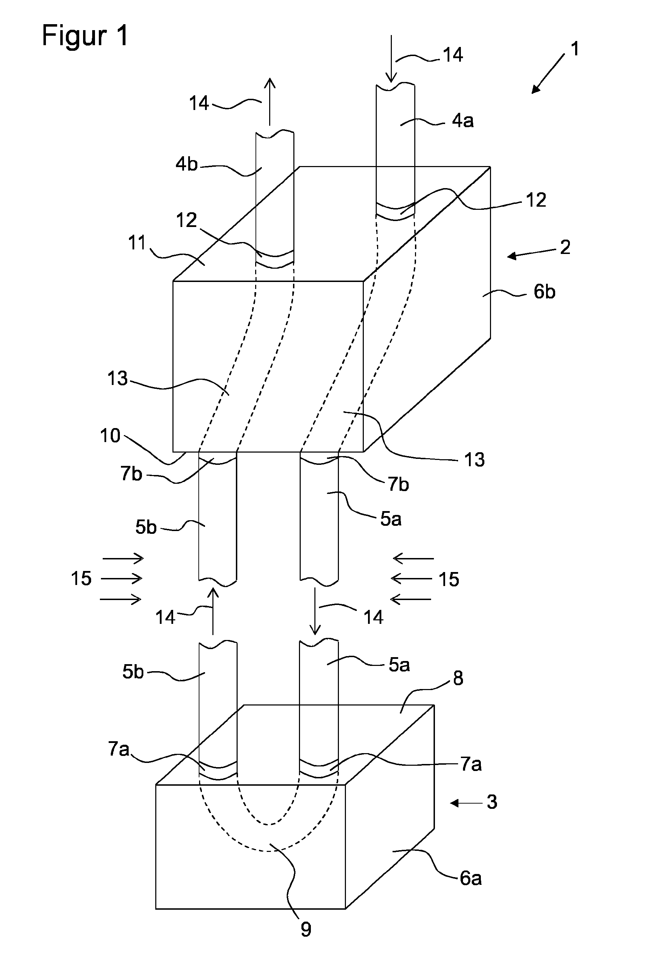

Figur 1 zeigt eine Erdsonde 1 für ein Geothermiesystem mit einem Erdsondenkopf 2 und einem Erdsondenfuß 3 gemäß einem Ausführungsbeispiel der Erfindung. Die Erdsonde 1 weist weiterhin zwei Zuleitungsrohre 4a und 4b sowie zwei Erdsondenrohre 5a und 5b auf. Die Zuleitungsrohre 4a und 4b bzw. die Erdsondenrohre 5a und 5b werden nachfolgend auch als Rohrleitungen bezeichnet.

Der Erdsondenfuß 3 weist einen Grundkörper 6a und zwei Erdsondenanschlüsse 7a auf. Die Erdsondenanschlüsse 7a sind auf einer Außenseite 8 des Grundkörpers 6a angeordnet. Im Inneren des Grundkörpers 6a sind die Erdsondenanschlüsse 7a fluidleitend mittels eines U-förmigen Verbindungsstücks 9 (gestrichelt dargestellt) verbunden. An den beiden Erdsondenanschlüssen 7a sind die Rohrleitungen 5a beziehungsweise 5b angeschlossen.

Der Erdsondenkopf 2 weist einen Grundkörper 6b auf. An einer Unterseite 10 des Grundkörpers 6b sind zwei Erdsondenanschlüsse 7b angeordnet. An einer Oberseite 11 des Grundkörpers 6b sind zwei Verteileranschlüsse 12 angeordnet. Die Erdsondenanschlüsse 7b sind über Verbindungsstücke 13 im Inneren des Grundkörpers 6b mit den Verteileranschlüssen 12 verbunden (gestrichelt dargestellt). An den Erdsondenanschlüsse 7b sind die Erdsondenrohre 5a beziehungsweise 5b angeschlossen. An den Verteileranschlüssen 12 sind die Zuleitungsrohre 4a beziehungsweise 4b angeschlossen.

Die Erdsonde 1 ist beispielsweise in einem Bohrloch angeordnet, welches senkrecht in die Erde gebohrt ist (nicht dargestellt). Nachdem die Erdsonde 1 in ein solches Bohrloch eingebracht wurde, wird dieses Bohrloch in der Regel mit einem wärmeleitenden Material aufgefüllt. Innerhalb der Rohrleitungen 4a, 4b, 5a und 5b und den Verbindungsstücken 9 beziehungsweise 13 fließt ein Fluid in einer Flussrichtung 14, beispielsweise Sole, also ein Glykol-/Wasser-Gemisch, zur Aufnahme bzw. Abgabe von Wärmeenergie. Über das Zuleitungsrohr 4a wird, beispielsweise von einer Wärmepumpe, das Fluid über den Erdsondenkopf 2 in das Erdsondenrohr 5a und über den Erdsondenfuß 3 in das Erdsondenrohr 5b geleitet. Über die Erdsondenrohre 5a und 5b wird in der Regel das im Vergleich zur Erde niedrige Temperaturniveau des Fluids auf ein höheres Temperaturniveau angehoben, indem Wärmeenergie 15 der Erde entzogen wird. Dadurch wird die Temperatur des Fluids auf ein höheres Temperaturniveau angehoben. Über den Erdsondenkopf 2 und das Zuleitungsrohr 4b wird die Wärmeenergie an eine Wärmesenke abgegeben, beispielsweise zurück an die Wärmepumpe. Die Wärmepumpe hebt das Temperaturniveau des Fluids unter Energiezufuhr an, beispielsweise auf ein für Heizzwecke vorbestimmtes Temperaturniveau.

Alternativ kann über das Fluid auch Wärmeenergie an die Erde abgegeben werden. Hierzu weist das Fluid ein im Vergleich zu der Erde höheres Temperaturniveau auf und gibt über die Rohrleitungen 5a und 5b Wärmeenergie an die Erde ab. In diesem Fall stellt die Erde eine Wärmesenke dar. Anschließend fließt das Fluid, welches nun ein niedrigeres Temperaturniveau aufweist, über das Zuleitungsrohr 4b ab, beispielsweise zu einer Umwälzpumpe, Wärmepumpe oder Kühlstation.

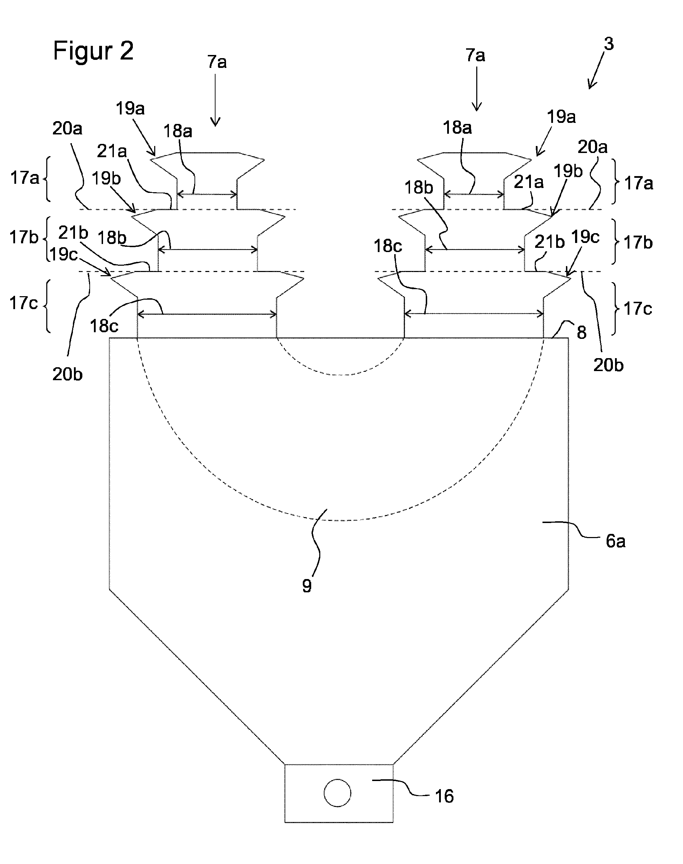

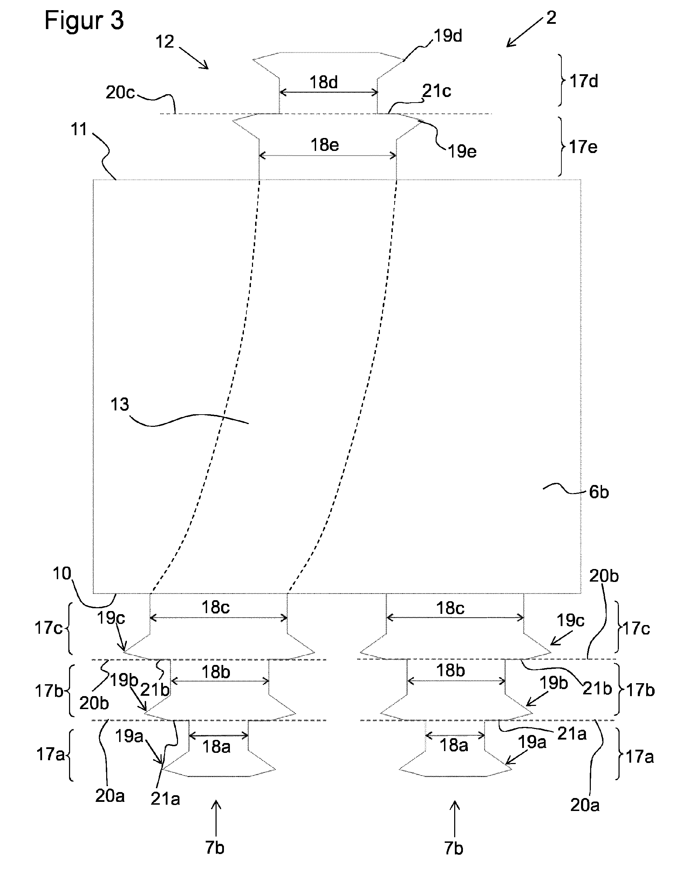

Die Anschlüsse 7a, 7b und 12 des Erdsondenfußes 3 beziehungsweise des Erdsondenkopfes 2 sind universelle Anschlüsse, die zum Anschluss von Rohrleitungen mit unterschiedlichen Durchmessern geeignet sind. Dadurch ist es möglich, verschiedene Rohrleitungen mit ein und denselben Erdsondenköpfen beziehungsweise Erdsondenfüßen zu verwenden. Diese modularen Anschlüsse 7a, 7b und 12 werden anhand der Figuren 2 und 3 ausführlich beschrieben.

Die Rohrleitungen 4a, 4b, 5a und 5b sind mittels einer Schnellverbindungstechnik an die entsprechenden Anschlüsse 7a, 7b und 12 angeschlossen. Dazu weisen die Rohrleitungen 4a, 4b, 5a und 5b im Wesentlichen einen Kunststoffwerkstoff wie beispielsweise Polyethylen oder einen Verbundwerkstoff auf, welcher einen sogenannten "Memory Effekt", also ein Formgedächtnis, aufweist. Dieses Formgedächtnis ist besonders für Schnellverbindungstechniken von Nöten, bei welcher ein Rohrende einer Rohrleitung mit Hilfe eines speziellen Werkzeuges aufgeweitet wird. Anschließend wird das Rohrende auf einen der Anschlüsse aufgesteckt. Aufgrund des Formgedächtnisses zieht sich das Rohr auf seinen ursprünglichen Zustand beziehungsweise seinen ursprünglichen Durchmesser zurück. Dadurch wird eine fluiddichte und mechanisch feste Verbindung zwischen der Rohrleitung und dem Anschluss hergestellt.

Figur 2 zeigt eine schematische Seitenansicht des Erdsondenfußes 3 der Erdsonde 1. Der Erdsondenfuß 3 weist den Grundkörper 6a auf, auf dessen Oberseite 8 die zwei Erdsondenanschlüsse 7a angeordnet sind. Jeder Erdsondenanschluss 7a weist drei Größenprofile 17a, 17b und 17c auf. Jedes Größenprofil 17a bis 17c weist einen Durchmesser 18a, 18b beziehungsweise 18c auf. Weiter weist jedes Größenprofil 17a bis 17c einen oberflächig profilierten Rohranschlussbereich 19a, 19b beziehungsweise 19c auf. Jeder Erdsondenanschluss 7a weist zudem zwei Ablängebenen 20a und 20b auf, die jeweils eine gedachte Schnittebene durch die Erdsondenanschlüsse 7a darstellen, in der jeder Erdsondenanschluss 7a abgelängt werden kann. Die Ablängebenen 20a und 20b liegen dabei im Wesentlichen in einer zur Längsachse der Erdsondenanschlüsse 7a senkrechten Ebene nahe eines jeweiligen Endstücks 21a beziehungsweise 21b des jeweiligen Größenprofils 17a, 17b beziehungsweise 17c.

Der Erdsondenfuß weist zusätzlich eine Haltevorrichtung 16 mit einer Öse auf. Über die Haltevorrichtung 16 lassen sich Gewichte an den Erdsondenfuß 3 anbringen, um diesen zusammen mit angeschlossenen Rohrleitungen 5a und 5b leicht in einem Bohrloch versenken zu können. Die Haltevorrichtung 16 kann alternativ beispielsweise auch eine Bohrung oder ein Gewinde für eine Schraubverbindung aufweisen.

Die drei Größenprofile 17a bis 17c sind zum Anschluss von Rohrleitungen mit einem Durchmesser von beispielsweise 25 mm, 32 mm und 40 mm geeignet. Entsprechend dem größten Durchmesser 18c sind die beiden Erdsondenanschlüsse 7a im Inneren des Grundkörpers 6a über ein U-förmiges Verbindungsstück 9 fluidleitend verbunden. Die Erdsondenanschlüsse 7a und der Grundkörper 6a können einstückig, beispielsweise in einem Spritzgussverfahren, hergestellt werden.

Mittels des Größenprofils 17a kann beispielsweise eine Rohrleitung mit einem Durchmesser von 25 mm an den Erdsondenanschluss 7a angeschlossen werden. Soll beispielsweise eine Rohrleitung mit einem Durchmesser von 32 mm über das Größenprofil 17b an den Erdsondenanschluss 7a angeschlossen werden, so wird das Größenprofil 17a entlang der Ablängebene 20a abgetrennt. Damit liegt der Anschlussbereich 19b des Größenprofils 17b endständig frei. Das Ablängen kann beispielsweise mit einem dafür vorgesehenen Rohrschneider oder einem sonstigen Werkzeug erfolgen. Ebenso kann der Anschlussbereich 19c durch Ablängen der beiden kleineren Größenprofile 17a und 17b endständig, beispielsweise für einen Anschluss einer Rohrleitung mit einem Durchmesser von 40 mm, freigelegt werden. Somit ist es möglich, eine Rohrleitung mit im Wesentlichen einem der drei Durchmesser 18a, 18b oder 18c mittels einer Schnellverbindungstechnik an dem Erdsondenanschluss 7a anzuschließen.

Bei der Herstellung können die Erdsondenanschlüsse 7a verschlossen sein, beispielsweise direkt im Spritzgussverfahren. Alternativ können die Erdsondenanschlüsse 7a auch mit einem zusätzlichen Element, beispielsweise einer Kappe, verschlossen sein. Damit wird verhindert, dass vor dem Anschließen von Rohrleitungen Schmutz in den Erdsondenfuß eintreten kann.

Figur 3 zeigt eine schematische Seitenansicht eines Erdsondenkopfes 2 der Erdsonde 1. Der Erdsondenkopf 2 weist den Grundkörper 6b auf, an dessen Unterseite 10 die zwei Erdsondenanschlüsse 7b angeordnet sind. Auf der Oberseite 11 des Grundkörpers 6b sind die zwei Verteileranschlüsse 12 angeordnet, wobei der zweite Verteileranschluss 12 von dem dargestellten Verteileranschluss 12 in der Seitenansicht gemäß Figur 3 verdeckt wird.

Die Erdsondenanschlüsse 7b entsprechen den Erdsondenanschlüssen 7a gemäß dem Erdsondenfuß 3 der Figur 2 und werden nicht erneut beschrieben.

Jeder Verteileranschluss 12 weist zwei Größenprofile 17d und 17e auf. Jedes Größenprofil 17d und 17e weist einen Durchmesser 18d beziehungsweise 18e auf. Weiter weist jedes Größenprofil 17d und 17e einen profilierten Anschlussbereich 19d beziehungsweise 19e auf. Jeder Verteileranschluss 12 weist weiter eine Ablängebene 20c auf, die eine gedachte Schnittebene durch den Verteileranschluss 12 darstellt, in der der Verteileranschluss 12 abgelängt werden kann. Die Ablängebene 20c liegt dabei im Wesentlichen in einer zur Längsachse des Verteileranschlusses 12 senkrechten Ebene nahe des Endstücks 21c des Größenprofils 17e. Im Inneren des Grundkörpers 6b ist jeder Verteileranschluss 12 entsprechend dem Durchmesser 18e jeweils mit einem Erdsondenanschluss 7b über ein Verbindungsstück 13 verbunden.

Die zwei Größenprofile 17d und 17e sind zum Anschluss von Rohrleitungen mit einem Durchmesser von beispielsweise 32 mm und 40 mm geeignet, wobei die Größe der Durchmesser im Wesentlichen korrespondierend zu den Größenprofilen 17a bis 17c ist. Die Anschlüsse 12 können alternativ auch 3 Größenprofile, analog zu den Anschlüssen 7a, aufweisen. Die Anschlüsse 7b und 12 sowie der Grundkörper 6b können einstückig, beispielsweise in einem Spritzgussverfahren hergestellt werden.

Der Anschluss von Rohrleitungen mit beispielsweise 32 mm oder 40 mm Durchmessern an die Verteileranschlüsse 12 erfolgt analog zum Anschluss von Rohrleitungen an die Erdsondenanschlüsse 7a beziehungsweise 7b, wie anhand der Figur 2 beschrieben wurde.

Analog zu dem Erdsondenfuß 3 gemäß der Figur 2 kann der Erdsondenkopf 2 bei der Herstellung verschlossen werden, um den Eintritt von Schmutz vor dem Anschluss von Rohrleitungen zu vermeiden.

Wie anhand des Ausführungsbeispiels gemäß den Figuren 1 bis 3 beschrieben wurde, werden der Erdsondenfuß 3 und der Erdsondenkopf 2 über zwei Erdsondenrohre 5a und 5b verbunden. Es ist allerdings auch möglich, dass sowohl der Erdsondenfuß 3 als auch der Erdsondenkopf 2 jeweils weitere Erdsondenanschlüsse aufweisen, die ebenfalls mittels weiterer Erdsondenrohre verbunden sind. Der Grundkörper 6a des Erdsondenfußes 3 weist im Inneren ein oder mehrere entsprechend angepasste Verbindungsstücke zum Verbinden der weiteren Rohrleitungen auf. Im Inneren des Grundkörpers 6b des Erdsondenkopfes 2 sind ein oder zwei Erdsondenanschlüsse mit einem Verteileranschluss 12 über ein Verbindungsstück verbunden.

Die in dem beschriebenen Ausführungsbeispiel darlegten Merkmale einer Erdsonde, eines Erdsondenkopfes und eines Erdsondenfußes können auf verschiedene Weise miteinander kombiniert werden, um die jeweils genannten Vorteile und/oder Funktionen zu verwirklichen.

### Bezugszeichenliste

- 1: Erdsonde
- 2: Erdsondenkopf
- 3: Erdsondenfuß
- 4a, 4b: Zuleitungsrohr
- 5a, 5b: Erdsondenrohr
- 6a, 6b: Grundkörper
- 7a, 7b: Erdsondenanschluss
- 8: Außenseite
- 9: Verbindungsstück
- 10: Unterseite
- 11: Oberseite
- 12: Verteileranschluss
- 13: Verbindungsstück
- 14: Flussrichtung
- 15: Wärmequelle
- 16: Haltevorrichtung
- 17a, 17b, 17c,: Größenprofil
- 18a bis 18e: Durchmesser
- 19a, 19b, 19c: profilierter Anschlussbereich
- 20a, 20b, 20c: Ablängebene
- 21a, 21b, 21c: Endstück

## Patentansprüche

1. Erdsondenrohrverbindungsstück für eine modulare Erdsonde (1) eines Geothermiesystems, aufweisend
- einen Grundkörper (6a, 6b); und
- wenigstens zwei Erdsondenanschlüsse (7a, 7b), insbesondere für eine Schnellverbindungstechnik, wobei die wenigstens zwei Erdsondenanschlüsse (7a, 7b) jeweils an einer Außenseite (8, 10) des Grundkörpers (6a, 6b) angeordnet sind und wenigstens zwei unterschiedliche Größenprofile (17a, 17b, 17c) zum Anschluss von Rohrleitungen (5a, 5b) mit unterschiedlichen Querschnitten aufweisen.

2. Erdsondenrohrverbindungsstück nach Anspruch 1, bei welchem die wenigstens zwei Erdsondenanschlüsse (7a, 7b) derart ablängbar sind, dass ein oberflächig profilierter Anschlussbereich (19a, 19b, 19c) eines der wenigstens zwei unterschiedlichen Größenprofile (17a, 17b, 17c) endständig zum Anschluss an eine Rohrleitung (5a, 5b) mit entsprechendem Durchmesser (18a, 18b, 18c) mittels der Schnellverbindungstechnik freilegbar ist.

3. Erdsondenrohrverbindungsstück nach einem der Ansprüche 1 oder 2, bei welchem der Grundkörper (6a, 6b) und die wenigstens zwei Erdsondenanschlüsse (7a, 7b) einstückig hergestellt sind.

4. Erdsondenfuß (3), aufweisend
ein Erdsondenrohrverbindungsstück (16) nach einem der Ansprüche 1 bis 3, bei welchem die wenigstens zwei Erdsondenanschlüsse (7a) innerhalb des Grundkörpers (6a) fluidleitend, insbesondere durch ein U-förmiges Verbindungsstück (9), miteinander verbunden sind.

5. Erdsondenkopf (2), aufweisend
ein Erdsondenrohrverbindungsstück (16) nach einem der Ansprüche 1 bis 3, weiter aufweisend zwei Verteileranschlüsse (12) für eine Schnellverbindungstechnik, wobei die zwei Verteileranschlüsse (12) jeweils an einer Außenseite (11) des Grundkörpers (6b) angeordnet und innerhalb des Grundkörpers (6b) jeweils mit wenigstens einem Erdsondenanschluss (7b) fluidleitend miteinander verbunden sind.

6. Erdsondenkopf (2) nach Anspruch 5, bei welchem die zwei Verteileranschlüsse (12) jeweils wenigstens zwei unterschiedliche Größenprofile (17d, 17e) zum Anschluss von Rohrleitungen (4a, 4b) mit unterschiedlichen Querschnitten aufweisen.

7. Erdsondenkopf (2) nach Anspruch 6, bei welchem die zwei Verteileranschlüsse (12) derart ablängbar sind, dass ein oberflächig profilierter Anschlussbereich (19d, 19e) eines der wenigstens zwei unterschiedlichen Größenprofile (17d, 17e) endständig zum Anschluss an eine Rohrleitung (4a, 4b) mit entsprechendem Durchmesser (18d, 18e) mittels der Schnellverbindungstechnik freilegbar ist.

8. Erdsondenkopf (2) nach einem der Ansprüche 5 bis 7, bei welchem der Grundkörper (6b), die wenigstens zwei Erdsondenanschlüsse (7b) und die zwei Verteileranschlüsse (12) einstückig hergestellt sind.

9. Erdsonde (1) für ein Geothermiesystem, aufweisend einen Erdsondenfuß (3), insbesondere nach dem Anspruch 4, und einen Erdsondenkopf (2), insbesondere nach einem der Ansprüche 5 bis 8, die über mindestens zwei Erdsondenrohre (5a, 5b) miteinander verbunden sind, wobei der Erdsondenfuß (3) und der Erdsondenkopf (2) jeweils mindestens zwei Anschlüsse (7a, 7b) aufweisen und die Erdsondenrohre (5a, 5b) mittels einer Schnellverbindungstechnik mit den Anschlüssen (7a, 7b) des Erdsondenfußes (3) und des Erdsondenkopfes (2) verbunden sind.
